# EUROPEAN PATENT APPLICATION

(11) **EP 3 261 338 A1**
(43) Date of publication of application: **27.12.2017**
(21) Application number: 16752360.4
(22) Date of filing: 09.02.2016
(51) Int. Cl.: H04N 5/64, G02B 27/02

(54) **HEAD MOUNTED DISPLAY**

(30) Priority: 17.02.2015 JP 2015028593
(71) Applicant: Konica Minolta, Inc., Tokyo 100-7015 (JP)
(72) Inventor: KATO Junichi, Tokyo 100-7015 (JP)
(74) Representative: Gille Hrabal
(86) International application number: PCT/JP2016/053842
(87) International publication number: WO 2016/132974

(57) **Abstract**

A head mounted display (HMD) is provided with a frame worn on the head of an observer and supporting an optical unit, and a position adjusting mechanism. The position adjusting mechanism adjusts the position, in a vertical direction, of the optical unit by moving a nose-pad portion in the vertical direction relative to the frame. The optical unit includes: an observation optical system positioned in front of the eyes of the observer to cause light representing an image generated by an image generation unit to be diffracted and reflected by a hologram optical element in the direction of the observer's pupil, thereby enabling the observer to observe a virtual image of the image; and a rotating mechanism for causing the optical unit to rotate about an axis along the eye-width direction of the observer and to be held in an arbitrarily defined position.

## Description

### Technical Field

The present invention relates to a head-mounted display (HMD) that enables an observer to observe a virtual image.

### Background Art

An HMD which is worn on a head part of an observer to enable the observer to view an image (virtual image) on a personal basis is required to allow the position of an optical unit that permits observation of the image to be adjusted appropriately according to the size and shape of the observer's head and the position of his eyes. In this respect, according to Patent Document 1 identified below, an HMD is provided with a left-right movement mechanism, an up-down movement mechanism, and a front-rear movement mechanism which permit an optical unit that permits observation of an image to move in the left-right, up-down, and front-rear directions respectively relative to a holding member (for example, a frame), thereby to allow adjustment of the position of the optical unit.

### List of Citations

### Patent Literature

Patent Document 1: Japanese Patent Application published as No. 2001-228435 (see, among others, claim 1; paragraphs 0022, 0024; Fig. 2)

### Summary of the Invention

### Technical Problem

Inconveniently, according to Patent Document 1, the up-down direction position adjustment mechanism for the optical unit is provided in the optical unit in a consolidated manner together with other position adjustment mechanisms. This results in a complicated structure of the optical unit.

On the other hand, in an HMD, light representing an image displayed on an LCD (liquid crystal display device) is diffraction-reflected in the direction of the observer's pupil with a hologram optical element (HOE, holographic optical element) to permit the observer to observe a virtual image of the image. A HOE diffraction-reflects only light that is incident at a particular angle of incidence in a particular direction; that is, it has so-called (incidence) angle dependency. Thus, simply moving an optical unit including a HOE translationally in the up-down, left-right, and front-rear directions with respect to the observer's pupil (eye) may fail to place the HOE at a position that suits the position of the eye of the observer as the user (may fail to converge the light diffraction-reflected by the HOE appropriately in the observer's eye (on the retina). In that case, the observer cannot observe the virtual image clearly.

Devised to solve the problems mentioned above, the present invention aims to provide a head-mounted display that can achieve position adjustment of an optical unit in the up-down direction with a simple structure in the optical unit and that can, even with an optical unit structured to include a HOE, permit clear observation of an virtual image with observers of varying pupil positions.

### Means for Solving the Problem

According to one aspect of the present invention, a head-mounted display includes: an optical unit which enables an observer to observe a virtual image; a frame which is worn on a head part of the observer and which supports the optical unit; a nose rest which has a nose pad part that makes contact with a nose part of the observer; and a position adjustment mechanism which, by moving the nose rest in the up-down direction perpendicular to the interpupillary distance direction of the observer in relative terms with respect to the frame, adjusts the position of the optical unit in the up-down direction. Here, the optical unit includes: an image generator which generates an image; an observation optical system which is disposed in front of an eye of the observer and which, by diffraction-reflecting light representing an image generated by the image generator in the direction of the pupil of the observer with a hologram optical element, enables the observer to observe a virtual image of the image; and a pivot mechanism which permits the optical unit to pivot about an axis along the interpupillary distance direction of the observer and which holds the optical unit at an arbitrary position.

### Advantageous Effects of the Invention

With the above structure, it is possible to achieve position adjustment of an optical unit in the up-down direction with a simple structure in the optical unit, and to permit, even with an optical unit structured to include a HOE, clear observation of an virtual image with observers of varying pupil positions.

### Brief Description of Drawings

Fig. 1 is a front view showing the structure of an HMD (second HMD) that provides a basis for an HMD (first HMD) according to one embodiment of the present invention, with a front-side outer cover removed;
Fig. 2 is a side view of the second HMD above;
Fig. 3 is a bottom view of a part of the second HMD above including an optical unit;
Fig. 4 is a front view of the second HMD above, including an outer cover and a cable;
Fig. 5 is a top view of the right half of the second HMD above, with the outer cover opened at the top;
Fig. 6A is a rear view of a part of the second HMD above including the optical unit, including the cable;
Fig. 6B is a bottom view of a part of the second HMD above including the optical unit, including the cable;
Fig. 7 is a perspective view of the optical unit above, with part of a housing removed;
Fig. 8A is a perspective view of a principal part of the second HMD having a pivot support mechanism about a vertical axis;
Fig. 8B is a sectional view of a hinge in the second HMD in Fig. 8A;
Fig. 9 is a sectional view of the optical unit above;
Fig. 10A is a top view of the first HMD above;
Fig. 10B is a front view of the first HMD above;
Fig. 10C is a bottom view of the first HMD above;
Fig. 11 is a perspective view of a central part of a frame of the first HMD above, as seen from in front;
Fig. 12 is a perspective view of a central part of the frame of the first HMD above, as seen from behind;
Fig. 13 is a perspective view of a central part of the frame of the first HMD above, as seen from behind at a different angle than in Fig. 12;
Fig. 14 is a sectional view along line A-A' in Fig. 10B as seen from the direction indicated by arrows;
Fig. 15 comprises sectional views of an elastic member provided in a position adjustment mechanism in the first HMD above, in a hold position and a release position respectively;
Fig. 16 is a sectional view showing a state where a fastening member provided in the position adjustment mechanism above has been moved downward from its position in Fig. 14; and
Fig. 17 is a sectional view showing another structure of the position adjustment mechanism above.

### Description of Embodiments

An embodiment of the present invention will be described below with reference to the accompanying drawings. In the present description, whenever a range of values from "a" to "b" is mentioned, it is assumed that the range includes the lower limit value "a" and the upper limit value "b". The following description is in no way meant to limit the present invention.

### (Structure as a Basis for an HMD)

First, prior to a description of a head-mounted display (hereinafter referred to also as HMD) according to the embodiment, a structure that provides a basis for the HMD will be described.

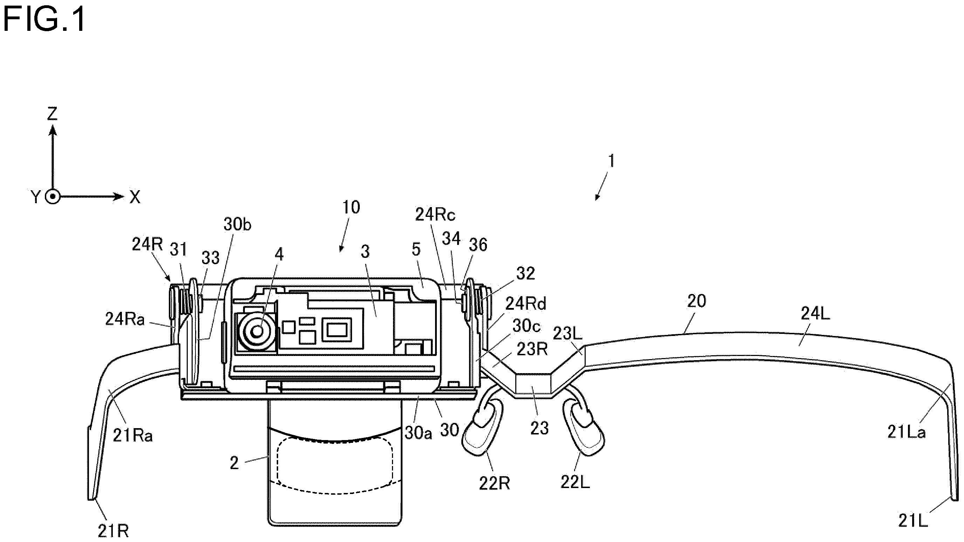

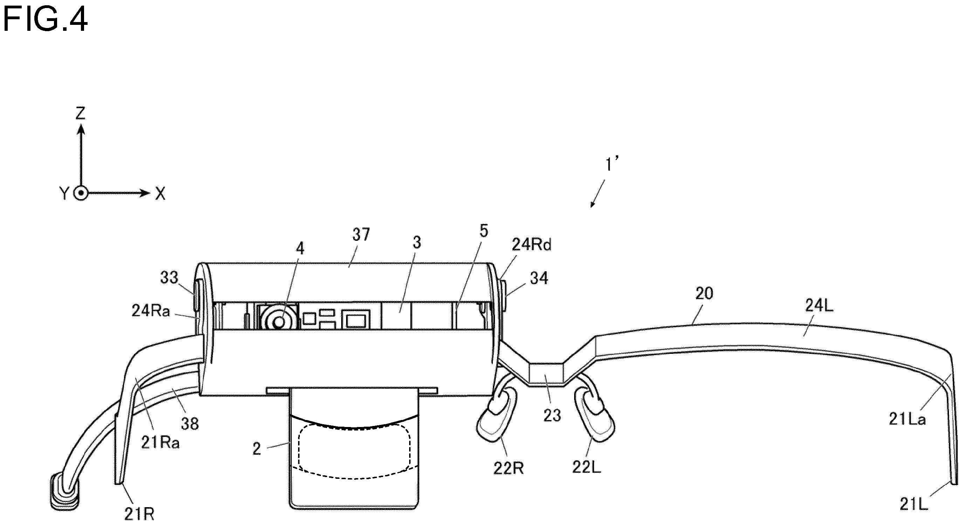

As shown in Figs. 1 to 4, an HMD 1' (second HMD) has a structure that provides a basis for an HMD 1 (first HMD) according to the embodiment, and is composed of an optical unit 10, which includes an observation optical system 2, an image generator 3, a front-shooting camera 4, a housing 5, and the like; a frame 20, which is worn on a head part of an observer; a support member 30; coil springs 31 and 32, which serve as biasing members; pivot members 33 and 34; fastening rings 35 and 36; an outer cover 37; and a cable 38. In Fig. 1 and the like, whenever necessary, the directions of three mutually perpendicular axes X, Y, and Z are indicated. The X, Y, and Z directions correspond respectively to the direction of the interpupillary distance of the observer (that is the left-right direction), the front-rear direction, and the up-down direction.

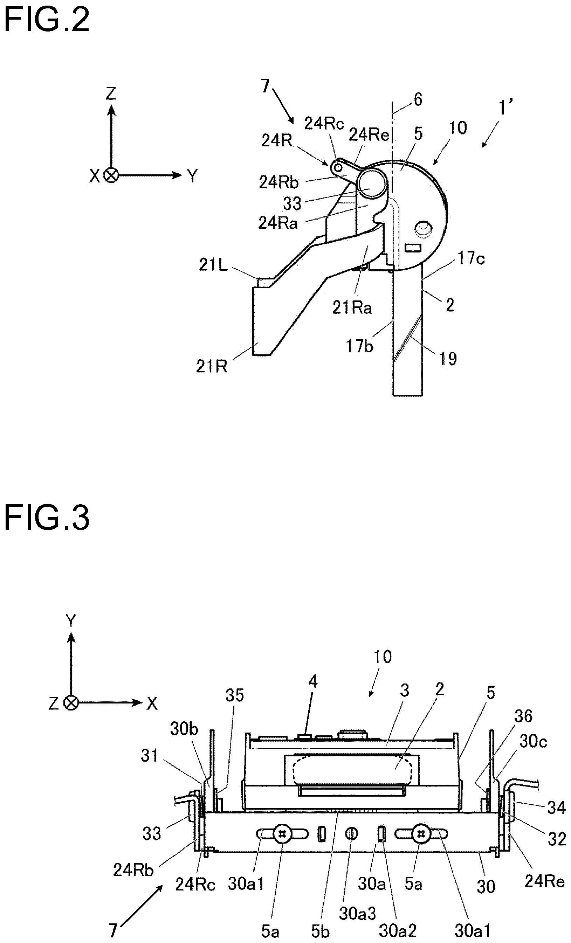

The observation optical system 2 and the image generator 3 are fixed to the housing 5. In the housing 5, a base end part of the observation optical system 2 and the image generator 3 are housed. The observation optical system 2 is disposed in front of an eye of the observer, specifically, in the embodiment, in front of the right eye. The image generator 3 is a part that generates an image that ends up as the virtual image observed through the observation optical system 2. The image generator 3 is composed of a light source such as an LED, a display element such as a liquid crystal display element, a converging lens, and the like, and directs light (image light) representing the generated image into the observation optical system 2. The image light that has exited from the image generator 3 and entered the observation optical system 2 is diffraction-reflected by a hologram optical element 19 arranged on an inclined face inside the observation optical system 2, and emerges through the inner face 17b serving as a light-exit face, eventually entering the observer's pupil (see Fig. 2). The observation optical system 2 protrudes from the housing 5, and constitutes a see-through display member that transmits light from the outside world to let it enter the observer's pupil. The observation optical system 2 and the image generator 3 will be described in detail later.

The frame 20 supports the optical unit 10 while leaving it pivotable via the pivot members 33 and 34 and the support member 30 extending in the interpupillary distance direction (X direction). The optical unit 10 is supported on the support member 30, of which opposite end parts are coupled to the pivot members 33 and 34 respectively. The support member 30 along with the optical unit 10 is pivotable relative to the frame 20 about the pivot members 33 and 34.

The frame 20 includes a pair of temples 21R and 21L, which are hung on the observer's ears; a bridge 23, which supports nose pads 22R and 22L, which rest on the observer's nose; a right coupling 24R, which connects the right end 23R of the bridge 23 to the front end 21Ra of the right temple 21R; and a left coupling 24L, which connects the left end 23L of the bridge 23 to the front end 21La of the left temple 21L. Thus, the HMD 1' can be worn on the observer's head in a fashion like eyeglasses.

The right coupling 24R includes flanges 24Ra and 24Rb, which extend from where the pivot member 33 is arranged in a direction radial to it; flanges 24Rd and 24Re, which extend from where the pivot member 34 is arranged in a direction radial to it; and a transverse beam 24Rc, which connects together the flanges 24Rb and 24Re on opposite sides of the housing 5 and which traverses the housing 5 in the interpupillary distance direction (X direction).

On the other hand, the support member 30 includes a base 30a, which extends in the interpupillary distance direction (X direction) and on which the optical unit 10 is mounted; and arms 30b and 30c, which extend along the YZ plane from opposite ends of the base 30a.

On each side of the optical unit 10, the pivot member 33 (34) is put through a hole provided in the flange 24Ra (24Rd), then through a coil spring 31 (32), and then through a hole provided in the arm 30b (30c), and a tip end part of the pivot member 33 (34) is fitted in the fastening ring 35 (36) so that the fastening ring 35 (36) is fixed to the tip end part; thus, the support member 30 supporting the optical unit 10 is pivotably coupled to the frame 20.

The pivot members 33 and 34 are disposed in a pair so as to face opposite side faces of the housing 5 in the interpupillary distance direction (X direction), and constitute a pivot axis (pivoting center axis). That is, the pivoting center axis is so located as to run through the housing 5. Despite the pivoting center axis being so located as to run through the housing 5, it gets around the housing 5 via the flanges 24Rb and 24Re and the transverse beam 24Rc to couple together the pivot member 33 at one side and the pivot member 34 at the other side. Owing to the pivoting center axis being so located as to run through the housing 5, the space in which the optical unit 10 (in particular, the housing 5) moves as it pivots can be made compact, and this contributes to user-friendliness and compactness.

Moreover, as shown in Fig. 2, on the side closer to the observer of the plane (plane 6) that includes the inner face 17b as the light-exit face of the observation optical system 2, the pivot axis (pivot members 33 and 34), which runs along the interpupillary distance direction of the optical unit 10, is located. Since the pivot axis is located at a position close to the observer's pupil, compared with the amount of movement of the observation optical system 2 in swing angle adjustment, the swing angle changes gently relative to the observer's line of sight, and this makes fine adjustment of the swing angle easier. Here, the swing angle denotes the angle of pivoting about the pivot axis running along the interpupillary distance direction, and adjustment of the swing angle, that is, adjustment of the position of the optical unit 10 in the pivoting direction, is referred to as swing angle adjustment.

In the embodiment, the coil springs 31 and 32 as biasing members are provided respectively at opposite sides in the interpupillary distance direction (X direction) of the optical unit 10, and by the coil springs 31 and 32 provided at opposite sides, the optical unit 10 (in direct terms, the support member 30) are pressed together, as if squeezed together, from opposite sides to produce friction resistance in the pivoting of the optical unit 10. More specifically, one end of the pivot member 33 (34) is coupled to the flange 24Ra (24Rb) of the frame 20, the other end of the pivot member 33 (34) is coupled to the arm 30b (30c) of the support member 30, and the coil spring 31 (32) presses the side face of the support member 30 in the interpupillary distance direction (X direction), that is, the face of the arm 30b (30c), thereby to produce the above-mentioned friction resistance.

As described above, with the coil springs 31 and 32, the optical unit 10 is biased and pressed as if squeezed together from opposite sides in the pivot axis direction so as to produce friction resistance when the optical unit 10 pivots, so that the optical unit 10 can be held at an arbitrary pivot angle (pivot position).

In the structure described above, it can be said that the coil springs 31 and 32, the pivot members 33 and 34, the flanges 24Ra and 24Rb, and the support member 30 (in particular, the arms 30b and 30c) constitute a pivot mechanism 7 (swing angle adjustment mechanism) that permits the optical unit 10 to pivot about an axis along the interpupillary distance direction of the observer and that holds it at an arbitrary position. With this pivot mechanism 7, it is possible to fine-adjust the swing angle of the optical unit 10, and to maintain the adjusted angle stably.

Moreover, performing swing angle adjustment at a position close to the eye exerts an effect substantially equivalent to fine-adjusting the position of the optical unit 10 in the up-down direction within a limited range, and allows fine-adjustment of the position of the optical unit 10 in the front-rear direction (depth direction) as well. That is, with the pivot mechanism 7, it is possible to obtain an effect equivalent to fine-adjusting the position of the optical unit 10 in the up-down and front-rear directions.

The flanges 24Ra, 24Rb, 24Rd, and 24Re at opposite ends and the transverse beam 24Rc may be formed out of separate members coupled together, but are preferably formed out of a single member. It is further preferable to form out of a single member the entire right coupling 24R including the just-mentioned elements, and even further up to the bridge 23 and the left coupling 24L. In that way, it is possible to build, with precision and high rigidity, the structure that supports the optical unit 10. It also provides other benefits such as a reduced number of components and easier assembly.

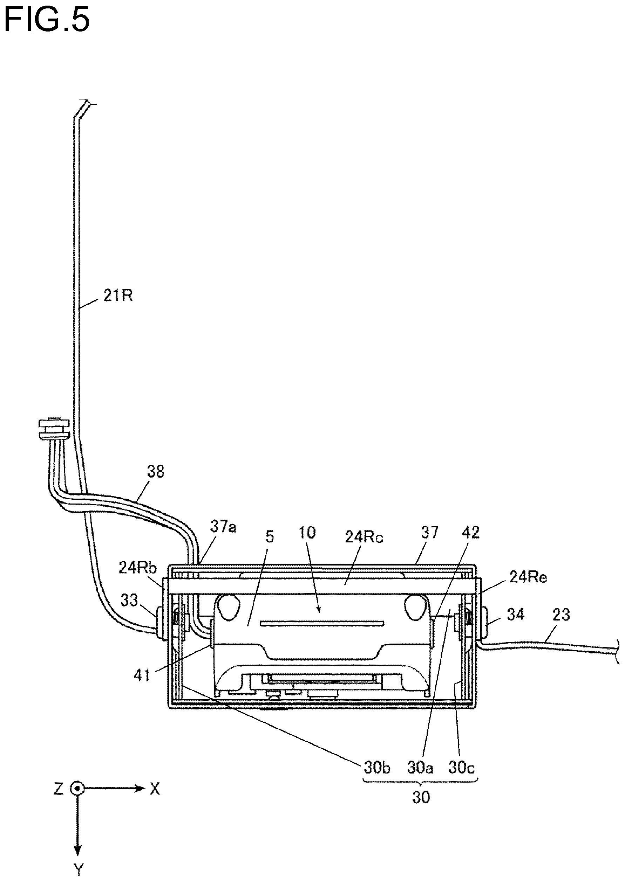

As shown in Fig. 5, the outer cover 37 is fixed to the support member 30, and pivots together with the optical unit 10 and the support member 30. The outer cover 37 covers the support member 30 and the housing 5, and exposes the observation optical system 2. Covering the pivoting part with the outer cover 37 helps suppress swing angle adjustment being hampered by entry of foreign matter.

The cable 38 serves to connect the optical unit 10 to an external unit. The external unit can be a power supply that supplies the optical unit 10 with electric power, a mobile computer that outputs an image signal to the optical unit 10, or a combination of a plurality of such devices.

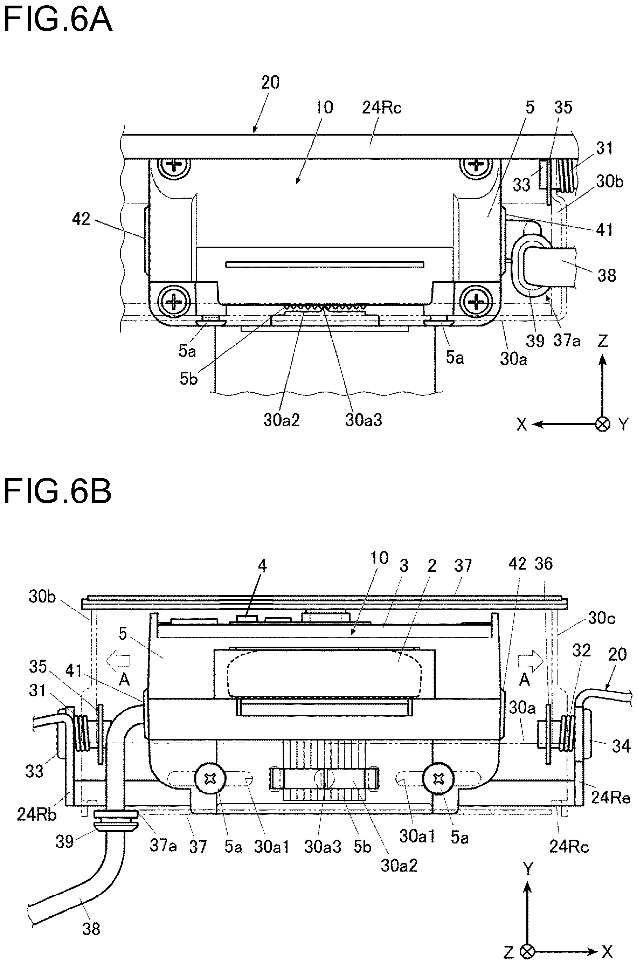

As shown in Figs. 6A and 6B, the cable 38 is led out of the housing 5, and is laid through a hole 37a provided in the outer cover 37 so as to be freely movable relative to the hole 37a. In the embodiment, a bush 39 fitted in the hole 37a fills the gap between the cable 38 and the hole 37a to keep the outer cover 37 dust-proof, and the materials and dimensions of the cable 38 and the bush 39 are so determined as to permit the former to slide relative to the latter.

As shown in Figs. 3, 6A, and 6B, the support member 30 supports the optical unit 10 via a slide mechanism such that the optical unit 10 is movable in the interpupillary distance direction (X direction). The slide mechanism has a lock mechanism that permits the slide movement to be locked at predetermined intervals, and includes guide holes 30a1 and 30a1, which are provided in a bottom part 30a of the support member 30, and guide pins 5a and 5a, which are fitted in the guide holes 30a1 and 30a1 and of which the tip ends are fixed to the housing 5. This, along with a locking groove strip 5b, which is provided on the face of the housing 5 facing the base 30a, and a plate spring 30a2, which has a projection 30a3 that fits in a groove formed in the locking groove strip 5b, constitute the lock mechanism.

The guide holes 30a1 and 30a1 extend long in the X direction, gaps are provided between the housing 5 and the arms 30b and 30c of the support member 30, and the guide pins 5a and 5a are loosely fitted in the guide holes 30a1 and 30a1; thus, as indicated by arrows A in Fig. 6B, the optical unit 10 is movable in the interpupillary distance direction (X direction) relative to the support member 30, the outer cover 37, and the frame 20.

As shown in Fig. 6B, in the locking groove strip 5b, a plurality of grooves cut in the Y direction are formed side by side at a predetermined pitch in the X direction, and the plate spring 30a2 exerts its elastic force so as to press the projection 30a3 against the locking groove strip 5b. Thus, the projection 30a3 fits in one of the grooves in the locking groove strip 5b, and this permits the slide movement of the optical unit 10 to be locked at a predetermined pitch. The pitch of the locking groove strip 5b can be set arbitrarily, and is preferably about 0.20 mm to 1.0 mm. By setting the pitch equal to or larger than the lower limit value, it is possible to allow fine adjustment while keeping manufacture easy and the locking groove strip 5b durable. On the other hand, by setting the pitch equal to or less smaller than the upper limit value, it is possible to ensure precise adjustment.

Thus, even when the optical unit 10 slides relative to the outer cover 37, or even when swing angle adjustment causes the outer cover 37 to move relative to the frame 20, the cable 38 is freely movable to go into and come out of the outer cover 37; thus, such operation can be performed smoothly without putting a mechanical load on the cable 38.

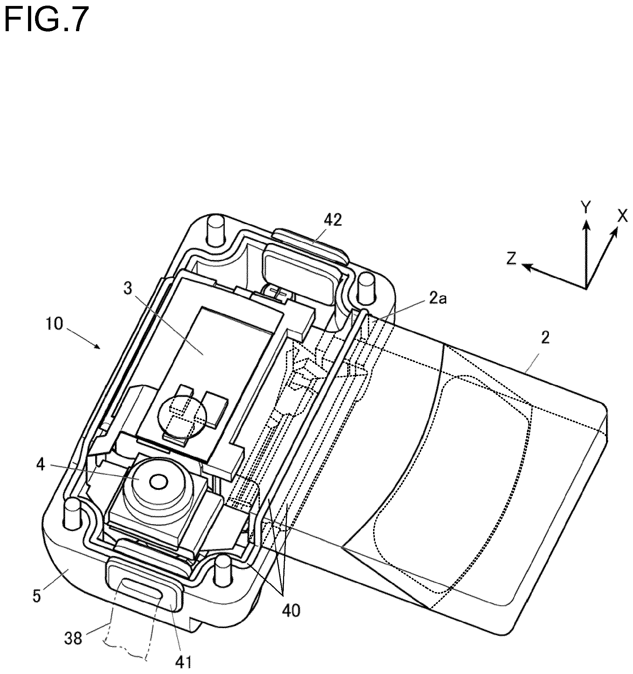

The interior of the housing 5 is kept dust-proof and water-proof by a seal member 40 shown in Fig. 7 and by a bush 41 and a cap 42.

The housing 5 separates into two halves (for example, on the ZX plane), and the seal member 40 is arranged one turn on the separation plane (on the ZX plane) of the housing 5 and one turn around a base end part 2a of the observation optical system 2 (on the XY plane). That is, the seal member 40 has a structure in which, to a part of it that is held between the two halves of the housing 5, a loop-form part in which the observation optical system 2 is inserted is coupled. By the seal member 40, sealing is achieved on the separation plane of the housing 5 and between the housing 5 and the base end part 2a of the observation optical system 2.

The bush 41 is fitted in the cable passage hole in the housing 5, and seals between the cable 38 and the housing 5. The cable 38 does not have to be movable relative to the bush 41, and the materials and dimensions of the bush 41 and the cable 38 are so determined that the former firmly grips the latter.

The cap 42 fitted to the housing 5 on the side opposite from the bush 41 is a lid member that seals the cable passage hole used when the optical unit 10 is fitted on the left side (arranged in front of the left eye). This permits the optical unit 10 to be fitted on whichever of the right and left sides. The cap 42 is something like the bush 41 with its hole filled up.

As described above, the interior of the housing 5 is kept dust-proof and water-proof, and it is thus possible to prevent liquid, such as water, or gas, such as water vapor, from entering the image generator 3 and the like in the housing 5.

The embodiment described above is not meant as any limitation. The optical unit 10 may be arranged in front of the observer's left eye, or two optical units 10 may be provided such that they are arranged in front of the observer's left and right eyes respectively. In a case where the optical unit 10 is arranged in front of the observer's left eye, the left coupling 24L of the frame 20 is given a structure similar to that of the right coupling 24R described above.

In the embodiment described above, the slide mechanism of the optical unit 10 includes a lock mechanism that permits its slide movement to be locked at a predetermined pitch; instead, a structure is also possible where, with no locking groove strip 5b formed, the plate spring 30a2 presses against a flat face of the housing 5 so as to lock the slide movement at arbitrary positions by friction. In that case, the plate spring 30a2 is designed to have a shape suitable for the purpose. Whether to fix the plate spring 30a2 to the support member 30 or to the housing 5 can be changed arbitrarily.

With the HMD 1' described above, the swing angle adjustment mechanism and the interpupillary distance direction position adjustment mechanism of the optical unit 10 (observation optical system 2) permit its angle and position to be adjusted to suit the shape and dimensions of the observer's head, his interpupillary distance, and the like. It is thus possible to allow a wide range of observers satisfactory observation of a virtual image.

Swing angle adjustment can be performed by the observer holding the outer cover 37 with his hand, and thus the inner face 17b and the outer face 17c of the observation optical system 2 are prevented from being soiled by being touched; it is thus possible to maintain satisfactory virtual image observation and outside world observation. Needless to say, the observation optical system 2 may be pivoted while being held at its tip end-side opposite side faces.

Interpupillary distance direction position adjustment can be performed by the observer holding the observation optical system 2 with his fingers placed on its opposite side faces, and thus the inner face 17b and the outer face 17c of the observation optical system 2 are prevented from being soiled by being touched; it is thus possible to maintain satisfactory virtual image observation and outside world observation.

During interpupillary distance direction position adjustment, holding the outer cover 37 with the other hand allows easier adjustment. Here, the outer cover 37 provides a part that can be held by the other hand, allowing easy holding, and also helps prevent the other hand from touching the housing 5 and making the slide movement of the optical unit 10 difficult.

Without the outer cover 37, there are dangers such as a finger being pinched between the housing 5 and the support member 30. In the embodiment, the outer cover 37 prevents difficulties and dangers as mentioned above, and allows safe and easy adjustment.

In the HMD 1' described above, coils springs are used as biasing members; thus, it is possible, with a simple structure, to build a mechanism that reliably holds the observation optical system 2 at an arbitrary swing angle. Using coil springs as biasing members enables assembly without the use of adhesive or the like, and helps keep their elasticity, that is, their ability to maintain a swing angle, constant for a long period, preventing deterioration of performance.

Owing to the biasing members 31 and 32 being interposed between the optical unit 10 and the frame 20, even if a strong impact (in particular, one in the interpupillary distance direction) acts on the HMD 1', it is damped; it is thus possible to reduce breakage of and damage to different parts of the optical unit 10 including the observation optical system 2. Using wave washers (corrugated annular plate springs) instead of coil springs provides similar workings and benefits, and thus the coil springs may be replaced with wave washers. As other biasing members, any elastic members selected from metal materials, resin materials such as natural and synthetic rubbers, and the like can be applied, preferred materials being those with little secular change.

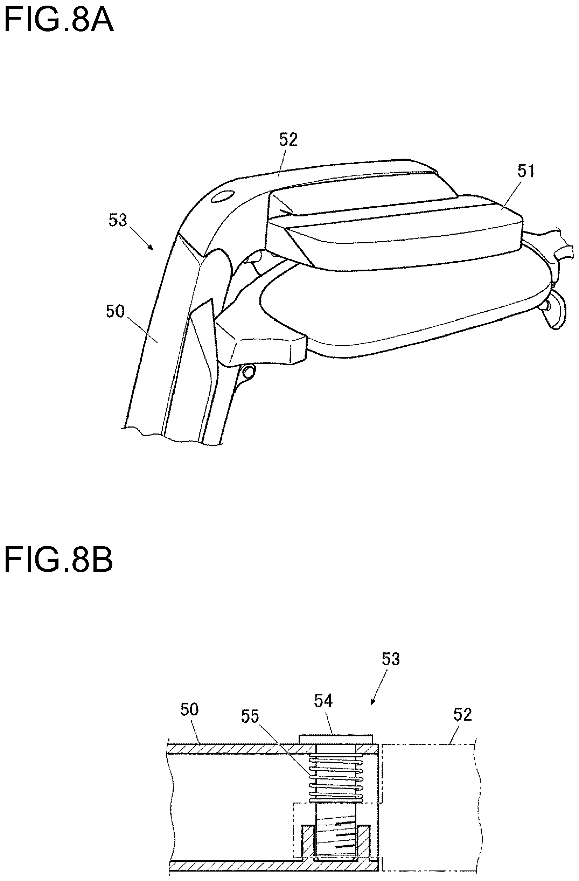

In the HMD 1' described above, pivot members and coil springs are used for swing angle adjustment; instead, application is also possible to a structure where the optical unit 10 pivots about a vertical axis. In another embodiment shown in Figs. 8A and 8B, a pivot member 54 and a coil spring 55 (or wave washer) may be applied to a hinge 53 about the vertical axis between a temple 50 and a support member 52 for an observation optical system 51. In this way, it is possible, with a simple structure, to easily achieve smooth angle adjustment of the optical system 51 about the vertical axis, reliable maintenance of the adjusted angle, retraction of the optical system 51 out of the observer's field of view, and the like. In the embodiment, by pivoting the optical system 51 about the vertical axis, it is possible to substantially move the virtual image also in the left-right direction (X direction) and in the front-rear direction (Y direction). A structure that permits the observation optical system (optical unit) to move in the vertical direction (up-down direction, Z direction) may be provided to enable adjustment in a wider range.

### (Details of the Optical Unit)

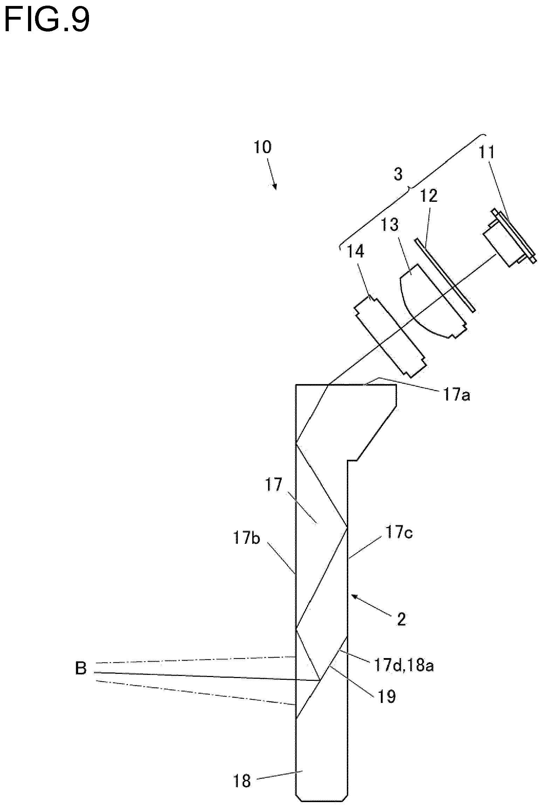

Next, the optical unit 10 mentioned above will be described in detail. Fig. 9 is a sectional view showing in outline the construction of the optical unit 10. The optical unit 10 is a unit that enables an observer to observe a virtual image, and includes an image generator 3, which generates an image, and an observation optical system 2, which constitutes a see-through display member. The image generator 3 includes a light source 11, a unidirectional diffuser plate 12, a converging lens 13, and a display element 14.

The light source 11 illuminates the display element 14, and comprises, for example, an RGB integrated LED that emits light in three wavelength bands of 462 ± 12 nm (B light), 525 ± 17 nm (G light), and 635 ± 11 nm (R light) in terms of the light intensity peak wavelength combined with the wavelength width at half the light intensity. As a result of the light source 11 emitting light in predetermined wavelength bands, the image light obtained by illuminating the display element 14 has predetermined wavelength bands; thus, by diffracting the image light with a hologram optical element 19, it is possible to allow the observer to observe a virtual image of the image displayed on the display element 4 at the position of the optical pupil B over the entire observation angle. The peak wavelengths of the respective colors of the light source 11 are set near the peak wavelengths of the diffraction efficiency of the hologram optical element 19, and this contributes to enhanced light use efficiency.

Since the light source 11 comprises an LED that emits R, G, and B light, it can be implemented inexpensively, and by illuminating the display element 14 with it, a color image can be displayed on the display element 14; thus, the color image can be presented as a virtual image to the observer. The LED elements for R, G, and B each have a narrow emission wavelength width, and by using a plurality of such LED elements, it is possible to display a bright image with good color reproducibility.

The display element 14 displays an image by modulating the light emitted from the light source 11 with image data, and comprises a transmissive liquid crystal display element having a matrix of pixels as a region that transmits light. The display element 14 may instead be reflective.

The observation optical system 2 is an optical system that is located in front of the observer's eye and that, by diffraction-reflecting in the direction of the observer's pupil the light representing an image generated by the image generator 3, permits the observer to observe a virtual image of that image. The observation optical system 2 includes an eyepiece prism 17, a deflecting prism 18, and the above-mentioned hologram optical element 19.

The eyepiece prism 17 is an optical prism that, on one hand, guides the image light entering it through a base-end face 17a from the display element 14 while totally reflecting it between mutually facing, mutually parallel inner and outer faces 17b and 17c to direct it through the hologram optical element 19 to the observer's pupil and that, on the other hand, transmits outside light to direct it to the observer's pupil. The eyepiece prism 17 is, together with the deflecting prism 18, formed of, for example, acrylic resin. The eyepiece prism 17 and the deflecting prism 18 are joined together with adhesive, with the hologram optical element 19 held between inclined faces 17d and 18a inclined relative to the inner and outer faces 17b and 17c.

The deflecting prism 18 is joined to the eyepiece prism 17 to constitute, together with it, substantially a plane-parallel plate. Joining the deflecting prism 18 to the eyepiece prism 17 helps prevent distortion in the outside world image that the observer observes through the observation optical system 2.

Specifically, for example, without the deflecting prism 18 joined to the eyepiece prism 17, when outside light is transmitted through the inclined face 17d, it is refracted, and this distorts the outside world image that is observed through the eyepiece prism 17. With the deflecting prism 18, having an inclined face 18a complementary with the eyepiece prism 17, joined to the eyepiece prism 17 to form substantially an integral plane-parallel plate, the refraction that occurs when outside light is transmitted through the inclined faces 17d and 18a (hologram optical element 19) can be canceled by the deflecting prism 18. In this way, distortion in the outside world image observed on a see-through basis is prevented.

With unillustrated eyesight-correcting eyeglasses worn between the observation optical system 2 and the observer, even an observer who usually wears eyeglasses can observe the virtual image with no problem.

The hologram optical element 19 is a volume-phase reflection hologram that diffraction-reflects the image light (light of wavelengths corresponding to three primary colors) emanating from the display element 14 to direct it to the observer's pupil (here, the observer's pupil is assumed to be located at the position of the optical pupil B formed by the observation optical system 2) and that enlarges the image displayed on the display element 14 to direct it as a virtual image to the observer's pupil. The hologram optical element 19 is fabricated so as to diffract (reflect) light in three wavelength bands of 465 ± 5 nm (B light), 521 ± 5 nm (G light), and 634 ± 5 nm (R light) in terms of the diffraction efficiency peak wavelength combined with the wavelength width at half the diffraction efficiency. Here, the diffraction efficiency peak wavelength denotes the wavelength at which diffraction efficiency peaks, and the wavelength width at half the diffraction efficiency denotes the wavelength band in which diffraction efficiency is equal to or higher than one-half of the peak value of diffraction efficiency.

The reflective hologram optical element 19 has high wavelength selectivity, and diffraction-reflects only light in the above-mentioned wavelength bands (around exposure wavelengths); thus, outside light containing wavelengths other than those diffraction-reflected is transmitted through the hologram optical element 19, and thus high outside light transmittance can be achieved.

In the construction described above, the light emitted from the light source 11 is diffused in one direction (for example in the interpupillary distance direction) by the unidirectional diffuser plate 12, is converged by the converging lens 13 (on a plane perpendicular to the interpupillary distance direction), and then enters the display element 14. The light that has entered the display element 14 is modulated pixel by pixel based on the image data, and emerges as image light. Thus, a color image is displayed on the display element 14.

The image light from the display element 14 enters the eyepiece prism 17 through its base-end face 17a, is totally reflected a plurality of times between the inner and outer faces 17b and 17c, and is then incident on the hologram optical element 19. The light incident on the hologram optical element 19 is diffraction-reflected in the direction of the observer, is transmitted through the inner face 17b as a light-exit face, and reaches the optical pupil B. Thus, with the observer's pupil placed at the position of the optical pupil B, the observer can observe an enlarged virtual image of the image displayed on the display element 14.

On the other hand, the eyepiece prism 17, the deflecting prism 18, and the hologram optical element 19 transmit almost all outside light, and thus through these the observer can observe the outside world image. Accordingly, the virtual image of the image displayed on the display element 14 is observed in a form superimposed on part of the outside world image.

In the manner described above, the observer can observe, via the hologram optical element 19, the image (virtual image) presented by the display element 14 and the outside world image simultaneously.

Incidentally, the hologram optical element 19 is a hologram having wavelength selectivity, and permits the viewing of the outside world with almost no loss of light. In place of a hologram, a half-mirror can be used, in which case, however, the amount of light from the outside world is one-half or less; thus, to permit observation of a bright outside world, it is preferable to use a hologram.

In the embodiment, the face (inclined face 17d) of the eyepiece prism 17 on which the hologram optical element 19 is bonded is a flat surface; the bonding face, however, does not necessarily have to be a flat surface, but may instead be a curved surface such as an aspherical surface or a combination of a flat surface and a curved surface.

### (HMD of the Embodiment)

Now, an HMD 1 (first HMD) according to the embodiment that has its base in the HMD 1' (second HMD) described above will be described.

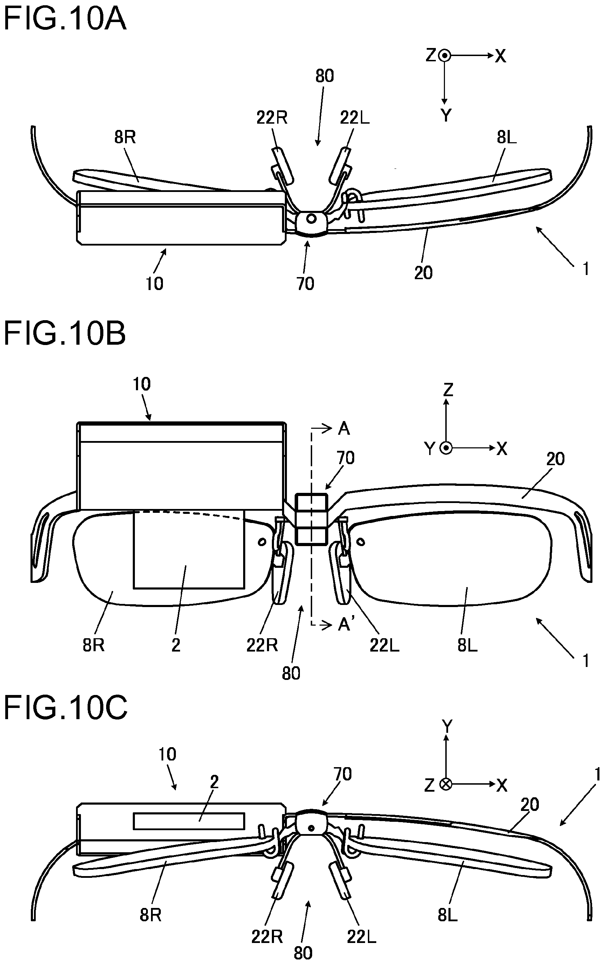

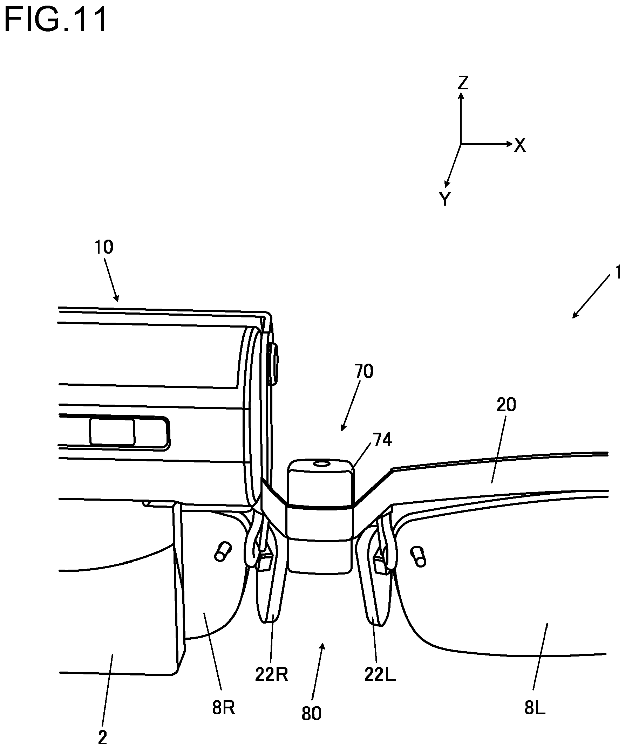

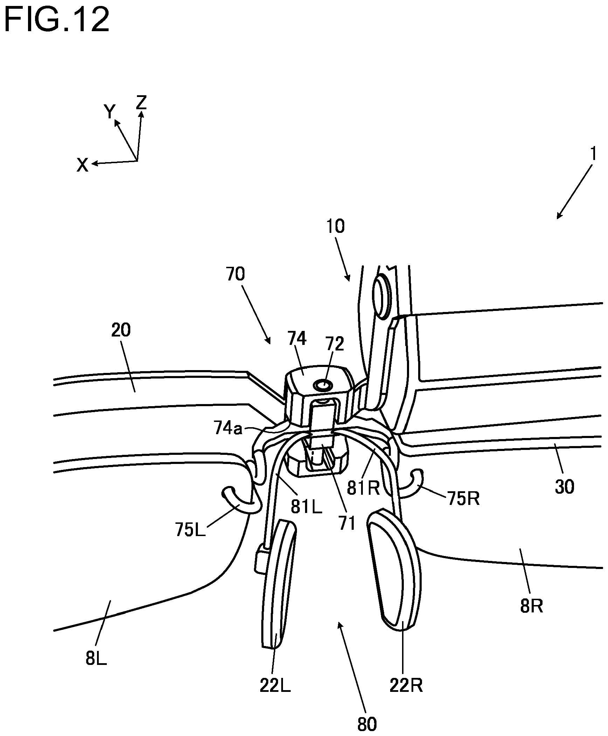

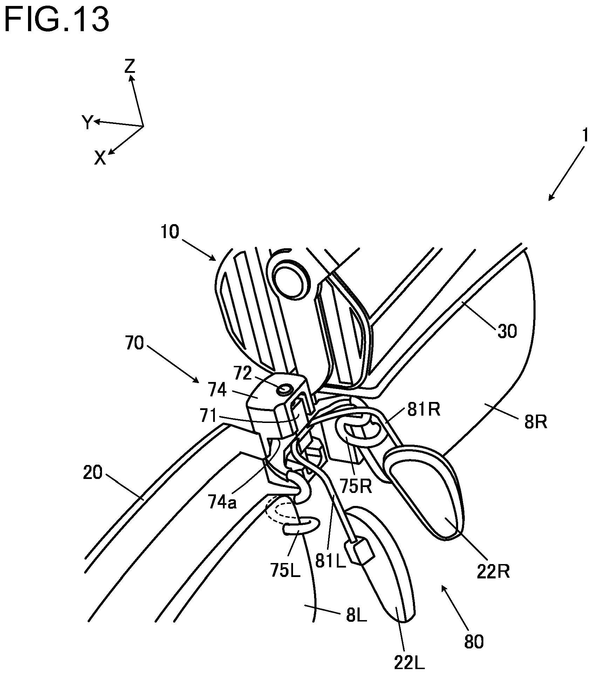

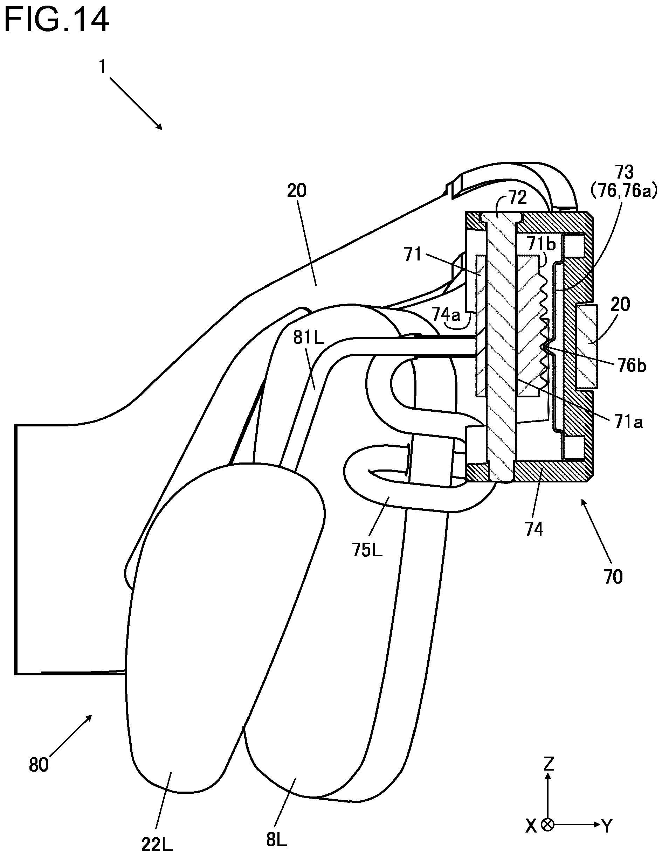

Figs. 10A, 10B, and 10C are a top view, a front view, and a bottom view, respectively, of an HMD 1 according to the embodiment, and Fig. 11 is a perspective view of a central part of the frame of the HMD 1 as seen from in front. Fig. 12 is a perspective view of a central part of the frame of the HMD 1 as seen from behind (from the observer's side), and Fig. 13 is a perspective view of a central part of the frame of the HMD 1 as seen from behind at a different angle than in Fig. 12. Fig. 14 is a sectional view along line A-A' in Fig. 10B as seen from the direction indicated by arrows. Compared with the structure of the HMD 1' described previously, the HMD 1 of the embodiment additionally includes a position adjustment mechanism 70 for adjusting the position of the optical unit 10 in the up-down direction so that a nose rest 80 including the nose pads 22R and 22L mentioned above is coupled to the frame 20 via the position adjustment mechanism 70. The position adjustment mechanism 70 will be described in detail below. In the diagrams referred to in the course of the following description, those parts of the optical unit 10 which are of not much interest at the moment, such as the front-shooting camera 4 and the cable 38 and the details of the mechanism for position adjustment in the interpupillary distance direction, are occasionally omitted from illustration.

The position adjustment mechanism 70 is a mechanism that adjusts the position, in the up-down direction, of the optical unit 10 supported on the frame 20 via the support member 30 by permitting the nose rest 80 of the HMD 1 to move in relative terms with respect to the frame 20 in the direction perpendicular to the observer's interpupillary distance direction. The position adjustment mechanism 70 includes a fastening member 71, a guide member 72, a holding member 73 (see Fig. 14), and a housing 74.

The fastening member 71 is a part to which the nose rest 80 of the HMD 1 is fastened, and is formed, for example, out of resin substantially in the shape of a rectangular parallelepiped. The nose rest 80 includes the nose pads 22R and 22L and couplings 81R and 81L. The nose pads 22R and 22L serve as nose pad parts that make contact with the observer's nose. The couplings 81R and 81L respectively couple the nose pads 22R and 22L to the fastening member 71, and are formed by bending a piece of fine metal wire.

The fastening member 71 holds right-eye and left-eye lenses 8R and 8L via lens holders 75R and 75L respectively. Thus, when the HMD 1 is worn on the observer's head, the right-eye and left-eye lenses 8R and 8L are located in front of the right and left eyes of the observer. The lens holder 75R, at one end, is fixed to the fastening member 71 and, at the other end, penetrates and thereby holds an edge part of the right-eye lens 8R. Likewise, the lens holder 75L, at one end, is fixed to the fastening member 71 and, at the other end, penetrates and thereby holds an edge part of the left-eye lens 8L. The lens holders 75R and 75L are formed substantially in the shape of bars, and are bent in zigzags so as not to interfere with any other parts; this shape, however, is not meant as any limitation.

In the embodiment, the fastening member 71 holds two lenses, namely the right-eye and left-eye lenses 8R and 8L, via the lens holders 75R and 75L; instead, it may hold only the right-eye lens 8R via the lens holder 75R, or it may hold only the left-eye lens 8L via the lens holder 75L. One of the right-eye and left-eye lenses 8R and 8L may be an eyesight correcting lens while the other is a dummy lens with no eyesight correcting power. The right-eye and left-eye lenses 8R and 8L may both be eyesight correcting lenses, or may both be dummy lenses.

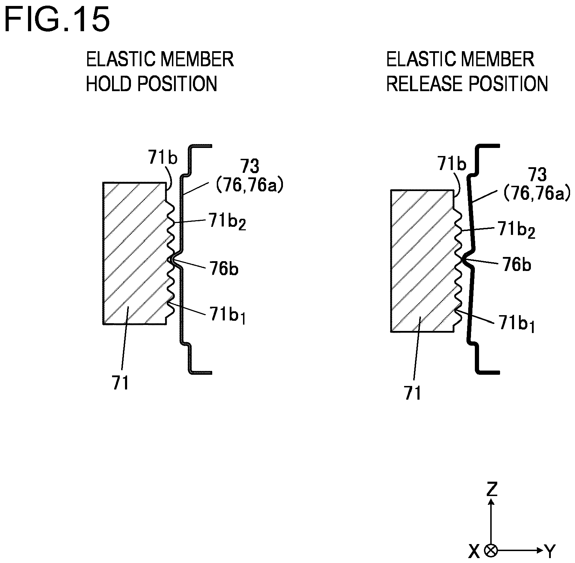

In the fastening member 71, a through-hole 71a is formed so as to penetrate it in the up-down direction (see Fig. 14), and the guide member 72 is put through the through-hole 71a. A side face 71b of the fastening member 71 parallel to the up-down direction is formed of a corrugated surface in which troughs 71b₁ (see Fig. 15), in which a projection 76b of a holding member 73 (plate spring 76a)-described later-can fit, and ridges 71b₂ (see Fig. 15) are formed alternately in the up-down direction.

Here, the side face 71b of the fastening member 71 on which the corrugated surface is formed is, of the two faces of the fastening member 71 crossing the Y direction, the one opposite from the observer. This is because, on the other side face of the fastening member 71, the lens holders 75R and 75L and the couplings 81R and 81L are fastened. Accordingly, it can be said that the corrugated surface can be formed on, of the side faces of the fastening member 71 excluding its top and bottom faces, a face other than the face to which the lens holders 75R and 75L and the couplings 81R and 81L are fastened.

The guide member 72 guides the movement of the fastening member 71 in the up-down direction, and is formed in a shape elongate in the up-down direction, out of a pin made of metal such as SUS (stainless steel). The guide member 72, when put through the through-hole 71a in the fastening member 71, guides the movement of the fastening member 71 in the up-down direction. The guide member 72 is, at its opposite ends in the up-down direction, fixed to top-face and bottom-face parts of the housing 74.

The holding member 73 is a member that holds the fastening member 71 at an arbitrary position in up-down direction, and is formed of, for example, an elastic member 76. The elastic member 76 deforms elastically between a hold position and a release position, and has an elastic force with which to return from the release position to the hold position. Fig. 15 shows the hold position and the release position of the elastic member 76. The hold position is a position where a projection 76b-described later-of the elastic member 76 fits in one of the troughs 71b₁ in the side face 71b of the fastening member 71 so as to hold the fastening member 71 at an arbitrary position in the up-down direction. On the other hand, the release position is a position where the projection 76b stays out of the troughs 71b₁ so as to release the fastening member 71 from holding.

In the embodiment, used as the elastic member 76 is a plate spring 76a. The plate spring 76a extends in the up-down direction, and is, at opposite ends, bent in the shape of stairs and fixed to the housing 74. In the embodiment, the plate spring 76a has a structure (bridge structure) in which the top and bottom ends are both fixed to the housing 74, but may instead have a structure (cantilever structure) in which only one of the top and bottom ends is fixed to the housing 74.

The plate spring 76a has, substantially in a central part thereof in the up-down direction, a projection 76b that projects toward the side face 71b of the fastening member 71. The projection 76b is formed in such a size (shape) that at least part of it fits in the troughs 71b₁ in the side face 71b of the fastening member 71.

The housing 74 is a frame member that encloses the fastening member 71 and that supports the guide member 72 and the holding member 73 (plate spring 76a), and is fixed to a central part of the frame 20 in the interpupillary distance direction. The housing 74 has a part of it cut off to form a cut-off part 74a to form a space for the movement of the couplings 81R and 81L and the lens holders 75R and 75B, which move as the fastening member 71 moves in the up-down direction.

In the above structure, when the observer, holding the housing 74, moves the nose rest 80 (for example, the nose pads 22R and 22L) downward, the fastening member 71, which supports the nose rest 80, moves downward along the guide member 72. Then, the projection 76b, which is fitted in a trough 71b₁ in the side face 71b of the fastening member 71, is pushed, against the elastic force of the plate spring 76a, onto the ridge 71b₂ next to the trough 71b₁ on its upper side (in the Z direction), and thus the fastening member 71 is released from holding. As the fastening member 71 moves farther downward, by the elastic force (restoring force) of the plate spring 76a, the projection 76b fits in the trough 71b₁ next to the ridge 71b₂ on its upper side (in the Z direction) and thereby holds the fastening member 71. As the fastening member 71 is moved further downward, the operation just described is repeated, so that the fastening member 71 is held at an arbitrary position in the up-down direction by the plate spring 76a.

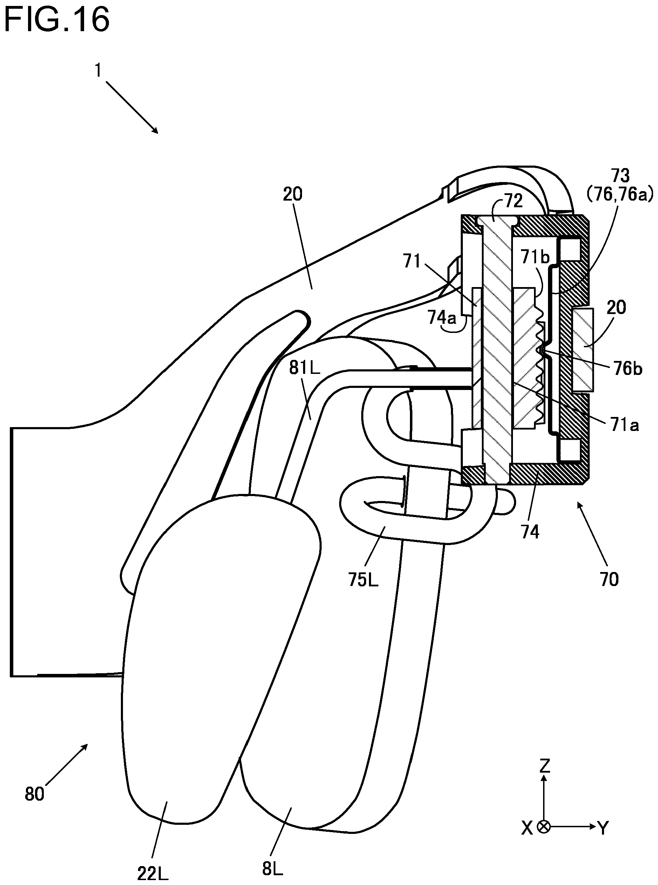

Fig. 16 shows a state where the fastening member 71 has been moved downward from its position in Fig. 14 to be held at a predetermined position. The plate spring 76a is, at end parts thereof, fixed to the housing 74, and the housing 74 is fixed to the frame 20. Thus, as the fastening member 71 moves downward inside the housing 74, the frame 20 fixed to the housing 74 moves upward in relative terms with respect to the fastening member 71 and the nose rest 80, and also the optical unit 10 supported on the frame 20 moves upward in relative terms. Reversely, as the fastening member 71 moves upward inside the housing 74, the frame 20 and the optical unit 10 move downward in relative terms with respect to the fastening member 71 and the nose rest 80.

Thus, as the nose rest 80 and the fastening member 71 are moved in the up-down direction relative to the housing 74 and the frame 20, the optical unit 10 supported on the frame 20 moves in the up-down direction in relative terms. Thus, by holding the fastening member 71 at an arbitrary position in the up-down direction with the plate spring 76a, the housing 74 and the optical unit 10 supported via the frame 20 can be held at an arbitrary position in the up-down direction.

As described above, the position adjustment mechanism 70 of the embodiment, by moving the nose rest 80 in the up-down direction in relative terms with respect to the frame 20, adjusts the position, in the up-down direction, of the optical unit 10 supported on the frame 20. Thus, the optical unit 10 itself does not need to be provided with a position adjustment mechanism in the up-down direction, and the structure of the optical unit can be simplified accordingly. The functions of swing angle adjustment and interpupillary distance adjustment, on one hand, and the function of position adjustment in the up-down direction, on the other hand, all as described above, can be distributed between the optical unit 10 and the position adjustment mechanism 70 external to it. Thus, unlike a structure where different position adjustment functions are consolidated in an optical unit, it is possible, while simplifying the structure of the optical unit 10, to achieve position adjustment of the optical unit 10 in the up-down direction with the position adjustment mechanism 70 external to the optical unit 10.

Owing to the pivot mechanism 7 described above, the optical unit 10 pivots about an axis along the observer's interpupillary distance direction, and is held at an arbitrary position. Thus, even when the optical unit 10 is so constructed as to permit the observer to observe a virtual image by use of a hologram optical element 19 having angle dependence, by combined use of the position adjustment of the optical unit 10 in the up-down direction by the position adjustment mechanism 70 and the swing angle adjustment of the optical unit 10 by the pivot mechanism 7, it is possible to fine-adjust the position of the hologram optical element 19 to an appropriate position according to the position of the observer's eye, let the light (image light) diffracted by the hologram optical element 19 converge appropriately in the observer's eye (on the retina), and permit the observer to observe the virtual image clearly (in other words, by the position adjustment mechanism 70 and the pivot mechanism 7, the hologram optical element 19 can be adapted to a default position corresponding to the clear image point). That is, of the position adjustment of the hologram optical element 19, the part which cannot be accomplished by translational movement of the optical unit 10 in the up-down direction or the like is accomplished through swing angle adjustment by the pivot mechanism 7, and thereby the hologram optical element 19 can be positioned at the optimal position that varies among individual observes. As a result, even with an optical unit 10 constructed to include a hologram optical element 19, it is possible to permit observers with varying pupil positions to observe the virtual image clearly. For example, even when, in the second HMD described above, with the interpupillary distance direction position adjustment mechanism, the position of the optical unit 10 in the interpupillary distance direction is set appropriately but swing angle adjustment alone cannot locate the optical unit 10 at a position where the user can view the virtual image satisfactorily, with the HMD of the embodiment, by combined use of the position adjustment mechanism in the up-down direction, the position and inclination of the optical unit 10 can be adjusted so as to permit the user to view the virtual image satisfactorily. This makes satisfactory adjustment possible with more users.

The position adjustment mechanism 70 includes the fastening member 71, the guide member 72, the holding member 73, and the housing 74, all described above. As described previously, as the nose rest 80 fixed to the fastening member 71 is moved, along the guide member 72 fixed to the housing 74, the fastening member 71 moves in the up-down direction. By holding the fastening member 71 at an arbitrary position in the up-down direction with the holding member 73 supported on the same housing 74, with respect to the frame 20 and the housing 74 fixed to it, the optical unit 10 can be held at an arbitrary position in the up-down direction. Thus, it is possible to reliably achieve the position adjustment of the optical unit 10 in the up-down direction.

The holding member 73 is formed of the above-described elastic member 76 which elastically deforms between the hold position and the release position of the fastening member 71, and it is thus possible to move the fastening member 71 in the up-down direction when released from holding and to hold it at an arbitrary position in the up-down direction.

Since the elastic member 76 is a plate spring 76a of which an end part is fixed to the housing 74, it is possible to reliably produce an elastic member 76 that has an elastic force with which to return from the release position to the hold position. The elastic member 76 (plate spring 76a) can be easily arranged in a small space inside the housing 74, and an optimized spring design allows its permanent use. Since the plate spring 76a has a simple structure, it is unlikely to fail.

The plate spring 76a has a projection 76b, and the side face 71b of the fastening member 71 is formed of a corrugated surface; thus, as a result of the projection 76b fitting in one of the troughs 71b₁, the fastening member 71 can be held reliably at the position of that trough 71b₁.

The fastening member 71 has a through-hole 71a, and the guide member 72 is put through the through-hole 71a; thus, it is possible, without giving the housing 34 a complicated structure, to guide the fastening member 71 in the up-down direction reliably. By sliding the fastening member 71 along the guide member 72, it is possible to move it over an arbitrary interval (for example, over a large distance), or to move it at predetermined intervals (for example, over a small distance at a time) in the up-down direction.

The housing 74 is fixed to a central part of the frame 20 in the interpupillary distance direction, and thus the position adjustment mechanism 70 including the housing 74 can be consolidated compactly in a central part of the frame 20. When the nose rest 80 is moved in the up-down direction in relative terms with respect to the frame 20, the entire frame 20 moves in the up-down direction in a well-balanced manner in the left-right direction, and thus, for example, in a binocular HMD where optical units 10 are located in front of both eyes, the position adjustment of the left and right optical units 10 in the up-down direction can be performed simultaneously. This, compared with a structure where the position adjustment of the left and right optical units 10 in the up-down direction is performed individually, allows easier position adjustment in the up-down direction.

The nose rest 80 includes couplings 81R and 81L which couple together the fastening member 71 and the nose pads 22R and 22L, and the fastening member 71 includes at least one of the lens holders 75R and 75L. The housing 74 has the cut-off part 74a which forms the space for the movement of the couplings 81R and 81L and the lens holders 75R and 75L. As the fastening member 71 moves in the up-down direction, the couplings 81R and 81L and the lens holders 75R and 75L move in the space (the cut-off part of the housing 34) formed by the cut-off part 74a of the housing 74; thus, it is possible, while avoiding interference of the couplings 81R and 81L and the lens holders 75R and 75L with the housing 74, to move the nose rest 80 in the up-down direction in relative terms with respect to the frame 20.

In a structure where the fastening member 71 holds at least one of the right-eye and left-eye lenses 8R and 8L via the lens holder 75R or 75L, the frame 20 supports the optical unit 10 in such a way that the observation optical system 2 is located on the opposite side of the at least one of the right-eye and left-eye lenses 8R and 8L from the observer (see Fig. 10B, 11, and the like).

On the opposite side of the right-eye or left-eye lenses 8R or 8L from the observer, there is no member that hampers the pivoting of the optical unit 10, and this makes it possible to reliably perform the position adjustment of the optical unit 10 in its pivoting direction. The optical unit 10 is a separate member from the right-eye or left-eye lenses 8R or 8L, and thus, as the right-eye or left-eye lenses 8R or 8L, a lens that suits the observer's eyesight (visual acuity) can be fitted. Using such a lens eliminates the need to perform dioptric power adjustment on the part of the optical unit 10 (in particular, the observation optical system 2), and this facilitates the designing of the optical unit 10 as well as the manufacture of the HMD 1.

### (Another Structure of the Position Adjustment Mechanism)

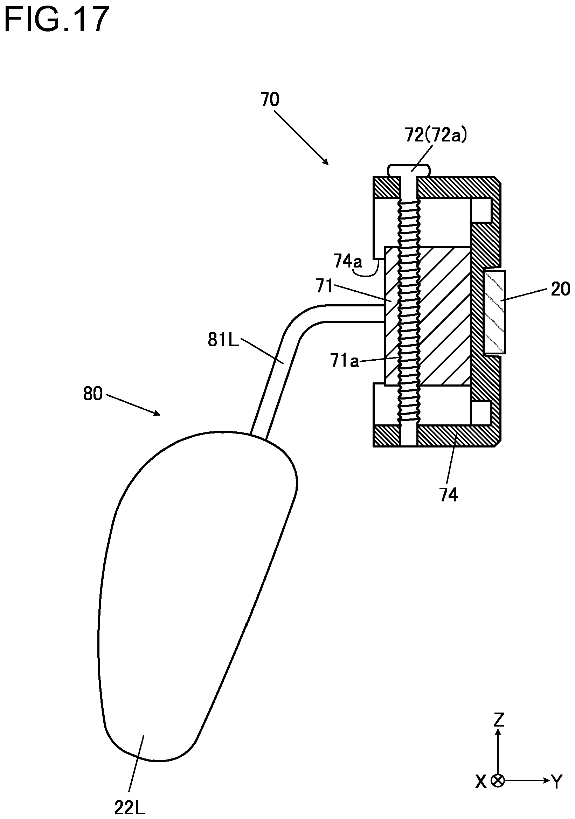

Fig. 17 is a sectional view showing another structure of the position adjustment mechanism 70. The position adjustment mechanism 70 uses, as a fastening member 71, a through-hole 71a having a screw thread formed in its inner face, and through this through-hole 71a of the fastening member 71 is put, as a guide member 72, a screw member 72a that screw-engages with the screw thread. The screw member 72a penetrates top-face and bottom-face parts of the housing 74, and is rotatably held on the housing 74.

With this structure, as the screw member 72a rotates, the fastening member 71 moves in the up-down direction, and when the guide member 72 stops rotating, the fastening member 71 is held at an arbitrary position in the up-down direction. Thus, a single screw member 72a doubles as a guide member 72 which guides the movement of the fastening member 71 in the up-down direction and a holding member which holds the fastening member 71 at an arbitrary position in the up-down direction, eliminating the need to provide a holding member 73 (elastic member 76) as used in Fig. 14; this helps simplify the structure of the position adjustment mechanism 70.

As described above, with the HMD 1 of the embodiment, by performing the position adjustment of the optical unit 10 by combined use of the position adjustment mechanism 70 in the up-down direction and the pivot mechanism 7 for swing angle adjustment, it is possible to adapt the hologram optical element 19 to a default position corresponding to the clear image point. Thus, despite a simple structure, irrespective of the shape and size of the observer's head, by adjusting and fixing the optical unit 10 at an arbitrary position and inclination, it is possible to achieve adjustment that allows satisfactory viewing of the virtual image. With the up-down direction position adjustment mechanism 70 consolidated in a part of the frame 20 between the eyebrows, by moving the nose rest 80, it is possible to perform position adjustment in the up-down direction easily. The optical unit 10 also allows interpupillary distance adjustment, and thus allows position adjustment of the optical unit 10 with a wide range of users.

The position adjustment mechanism 70 described above is applicable also to an HMD where the observation optical system 2 of the optical unit 10 doubles as the right-eye lens 8R or the left-eye lens 8L. In that case, however, the lens holder 75R or 75L for holding the right-eye or left-eye lens 8R or 8L is unnecessary (because the observation optical system 2 doubling as the right-eye or left-eye lens 8R or 8L is, as the optical unit 10, supposed on the frame 20).

It can be said that the head-mounted display of the embodiment described above may be structured as follows:

According to the embodiment, a head-mounted display includes: an optical unit which enables an observer to observe a virtual image; a frame which is worn on a head part of the observer and which supports the optical unit; a nose rest which has a nose pad part that makes contact with a nose part of the observer; and a position adjustment mechanism which, by moving the nose rest in the up-down direction perpendicular to the interpupillary distance direction of the observer in relative terms with respect to the frame, adjusts the position of the optical unit in the up-down direction. The optical unit includes: an image generator which generates an image; an observation optical system which is disposed in front of an eye of the observer and which, by diffraction-reflecting light representing an image generated by the image generator in the direction of the pupil of the observer with a hologram optical element, enables the observer to observe a virtual image of the image; and a pivot mechanism which permits the optical unit to pivot about an axis along the interpupillary distance direction of the observer and which holds the optical unit at an arbitrary position.

The position adjustment mechanism may include: a fastening member to which the nose rest is fixed; a guide member which guides the movement of the fastening member in the up-down direction; a holding member which holds the fastening member at an arbitrary position in the up-down direction; and a housing which is fixed to the frame and which supports the guide member and the holding member.

The holding member may be composed of an elastic member that elastically deforms between a hold position for holding the fastening member at the arbitrary position in the up-down direction and a release position for releasing the fastening member from holding, the elastic member having an elastic force for returning from the release position to the hold position. By using as the holding member an elastic member having an elastic force as just described, it is possible to reliably achieve the movement of the fastening member in the up-down direction when released from holding and the holding of the fastening member at an arbitrary position in the up-down direction.

The elastic member may be a plate spring of which an end part is fixed to the housing.

The plate spring may have a projection that projects toward a side face of the fastening member parallel to the up-down direction, and the side face of the fastening member may be formed of a corrugated surface on which a trough in which the projection fits to bring the plate spring into the hold position and a ridge on which the projection rides out of the trough to bring the plate spring into the release position are formed alternately in the up-down direction.

The fastening member may have a through-hole that penetrates it in the up-down direction, and the guide member may be put through the through-hole.

The fastening member may have a through-hole that penetrates it in the up-down direction and that has a screw thread formed its an inner face. The guide member may be composed of a screw member that screw-engages with the screw thread in the inner face of the through-hole such that, as the screw member rotates, the guide member guides and moves the fastening member in the up-down direction. The holding member may be composed of the screw member such that, as the screw member stops rotating, the holding member holds the fastening member at the arbitrary position in the up-down direction.

The housing may be fixed to a central part of the frame in the interpupillary distance direction.

The nose rest may include a coupling that couples together the fastening member and the nose pad part. The fastening member may include a lens holder that holds at least one of a right-eye lens and a left-eye lens. The housing may have formed in it a cut-off part that forms a movement space for the coupling and the lens holder which move as the fastening member moves in the up-down direction.

The frame may support the optical unit such that the observation optical system is disposed on the opposite side of at least one of the right-eye and left-eye lenses from the observer.

The observation optical system may include an optical prism on which the hologram optical element is bonded. The optical prism may have a light-exit face through which light emitted from the image generator, then guided inside the optical prism, and then diffraction-reflected by the hologram optical element emerges in the direction of the observer. A pivot axis along the interpupillary distance direction of the optical unit in the pivot mechanism may be located on the side of a plane including the light-exit face closer to the observer.

### Industrial Applicability

The present invention finds applications in HMDs that are worn on a head part of an observer.

### List of Reference Signs

- 1: HMD (head-mounted display)
- 2: observation optical system
- 3: image generator
- 7: pivot mechanism
- 8R: right-eye lens
- 8L: left-eye lens
- 10: optical unit
- 17: eyepiece prism (optical prism)
- 17b: inner face (light-exit face)
- 19: hologram optical element
- 20: frame
- 22R: nose pad (nose pad part)
- 22L: nose pad (nose pad part)
- 70: position adjustment mechanism
- 71: fastening member
- 71a: through-hole
- 71b: side face
- 71b₁: trough
- 71b₂: ridge
- 72: guide member
- 72a: screw member (guide member, holding member)
- 73: holding member
- 74: housing
- 74a: cut-off part
- 75R: lens holder
- 75L: lens holder
- 76: elastic member
- 76a: plate spring
- 76b: projection
- 80: nose rest
- 81R: coupling
- 81L: coupling

## Claims

1. A head-mounted display, comprising:
an optical unit which enables an observer to observe a virtual image;
a frame which is worn on a head part of the observer and which supports the optical unit;
a nose rest which has a nose pad that makes contact with a nose part of the observer; and
a position adjustment mechanism which, by moving the nose rest in an up-down direction perpendicular to an interpupillary distance direction of the observer in relative terms with respect to the frame, adjusts a position of the optical unit in the up-down direction,
wherein
the optical unit includes:
an image generator which generates an image;
an observation optical system which is disposed in front of an eye of the observer and which, by diffraction-reflecting light representing an image generated by the image generator in a direction of a pupil of the observer with a hologram optical element, enables the observer to observe a virtual image of the image; and
a pivot mechanism which permits the optical unit to pivot about an axis along the interpupillary distance direction of the observer and which holds the optical unit at an arbitrary position.

2. The head-mounted display of claim 1, wherein
the position adjustment mechanism includes:
a fastening member to which the nose rest is fixed;
a guide member which guides movement of the fastening member in the up-down direction;
a holding member which holds the fastening member at an arbitrary position in the up-down direction; and
a housing which is fixed to the frame and which supports the guide member and the holding member.

3. The head-mounted display of claim 2, wherein
the holding member is composed of an elastic member that elastically deforms between a hold position for holding the fastening member at the arbitrary position in the up-down direction and a release position for releasing the fastening member from holding, the elastic member having an elastic force for returning from the release position to the hold position.

4. The head-mounted display of claim 3, wherein
the elastic member is a plate spring of which an end part is fixed to the housing.

5. The head-mounted display of claim 4, wherein
the plate spring has a projection that projects toward a side face of the fastening member parallel to the up-down direction, and
the side face of the fastening member is formed of a corrugated surface on which
a trough in which the projection fits to bring the plate spring into the hold position and
a ridge on which the projection rides out of the trough to bring the plate spring into the release position
are formed alternately in the up-down direction.

6. The head-mounted display of any one of claims 2 to 5, wherein
the fastening member has a through-hole that penetrates the fastening member in the up-down direction, and
the guide member is put through the through-hole.

7. The head-mounted display of claim 2, wherein
the fastening member has a through-hole that penetrates the fastening member in the up-down direction and that has a screw thread formed in an inner face thereof,
the guide member is composed of a screw member that screw-engages with the screw thread in the inner face of the through-hole, and as the screw member rotates, the guide member guides and moves the fastening member in the up-down direction, and
the holding member is composed of the screw member, and as the screw member stops rotating, the holding member holds the fastening member at the arbitrary position in the up-down direction.

8. The head-mounted display of any one of claims 2 to 7, wherein
the housing is fixed to a central part of the frame in the interpupillary distance direction.

9. The head-mounted display of any one of claims 2 to 8, wherein
the nose rest includes a coupling that couples together the fastening member and the nose pad,
the fastening member includes a lens holder that holds at least one of a right-eye lens and a left-eye lens, and
the housing has formed therein a cut-off part that forms a movement space for
the coupling and the lens holder which move as the fastening member moves in
the up-down direction.

10. The head-mounted display of claim 9, wherein
the frame supports the optical unit such that the observation optical system is disposed on an opposite side of at least one of the right-eye and left-eye lenses from the observer.

11. The head-mounted display of any one of claims 1 to 10, wherein
the observation optical system includes an optical prism on which the hologram optical element is bonded,
the optical prism has a light-exit face through which light emitted from the image generator, then guided inside the optical prism, and then diffraction-reflected by the hologram optical element emerges in a direction of the observer, and
a pivot axis along the interpupillary distance direction of the optical unit in the pivot mechanism is located on a side of a plane including the light-exit face closer to the observer.
